# EUROPEAN PATENT SPECIFICATION

(11) **EP 1 648 078 B1**
(45) Date of publication and mention of the grant of the patent: **25.08.2010**
(21) Application number: 04256290.0
(22) Date of filing: 12.10.2004
(51) Int. Cl.: H02K 49/02, H02K 51/00, F16H 41/00

(54) **Flexible and rigid two-way coupler and application**
Flexible und starre Zweiwegekupplung und Anwendung
Embrayage bidirectionnel flexible et rigide et application

(43) Date of publication of application: 19.04.2006
(60) Divisional application: 10001158.4
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(56) References cited:
- DE-C- 711 928
- DE-C1- 19 751 039
- DE-U1- 9 000 881
- FR-A- 1 038 123
- FR-A- 1 258 803
- FR-A- 2 241 907
- GB-A- 1 193 965
- GB-A- 1 518 092
- GB-A- 2 278 242
- US-A- 5 007 498
- US-A- 6 157 147
- US-A1- 2004 200 685

## Description

### BACKGROUND OF THE INVENTION

### (a) Field of the Invention

The present invention is related to a flexible and rigid bi-status coupler and its application device, and more particularly to one of rotary kinetic energy with special function that transmit the rotary kinetic energy with flexible acceleration with revolution difference from an input side to an output side for the output side to execute non-rigid transmission with revolution difference that varies with the load; on the contrary, rigid transmission without revolution difference of rotary kinetic energy is transmitted back from the output side to the input side.

The flexible and rigid bi-status coupler is applied in an energy storage impact type of load, such as a punch, a press lathe or a device driven by instable fluid force, such as a fluid force actuated extractor hood, or a fly wheel energy storage device or other loads.

### (b) Description of the Prior Art:

There are two types of conventional coupler, one is related to a flexible coupler, such as an electric vortex coupler, fluid coupler, or generation effect coupler, to provide non-rigid transmission varies depending on the load upon executing a rotary kinetic energy transmission between the input side and the output side; another type of coupler relates to a rigid coupler, that is a friction type of clutch driven by electromagnetic, fluid, mechanical or eccentric force with a limited range of application since both of the input side and the output side indicate synchronous coupling without revolution difference upon executing normal transmission of rotary kinetic energy between the input and the output sides.

### SUMMARY OF THE INVENTION

The primary purpose of the present invention is to provide a mechanical kinetic energy coupler provided with an input side and an output side, wherein, the kinetic transmission feature is related to a flexible acceleration with revolution difference when the rotary kinetic energy is transmitted from the input side to the output side, and the kinetic transmission feature is related to a rigid transmission without revolution difference when the rotary kinetic energy is transmitted back from the output side to the input side.

The invention is defined in the independent claim 1.

### BRIEF DESCRIPTION OF THE DRAWINGS

Fig. 1 is a schematic view of the structural principle of a flexible and rigid bi-status coupler.
Fig. 2 is a preferred embodiment of a bi-status coupler that is comprised of an electric vortex coupler incorporated with a one-way transmission according to the invention.
Fig. 3 is a bi-status coupler that is comprised of a fluid coupler incorporated with a one-way transmission.
Fig. 4 is a bi-status coupler taken from Fig. 1 that is comprised of an electromagnetic effect coupler incorporated with a one-way transmission.
Fig. 5 is a schematic view of a structure of a controllable clutch adapted to the input or the output side of the bi-status coupler illustrated in Fig. 1.

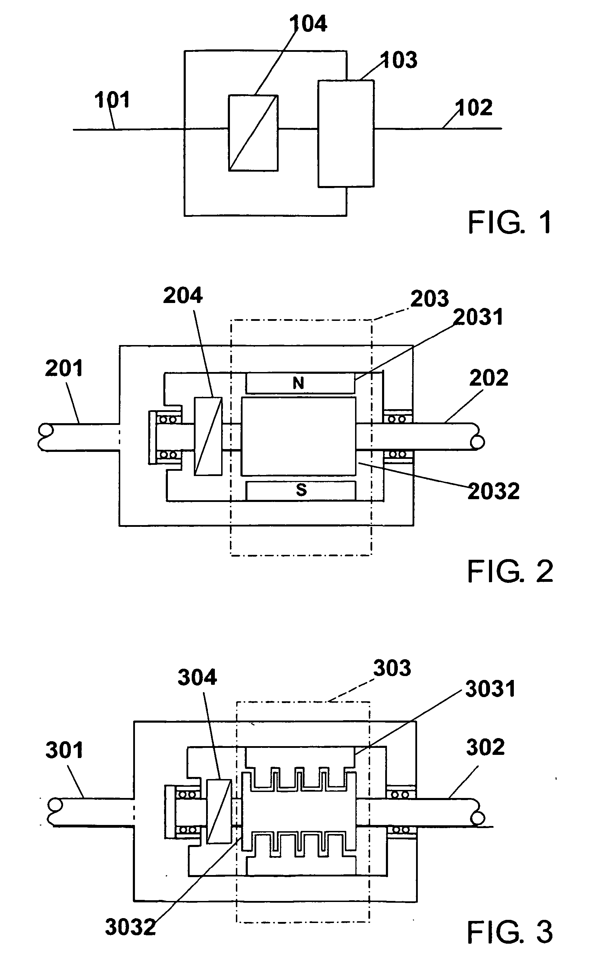

Figures 1, 3, 4 and 5 show examples which are not part of the claimed invention.

### DETAILED DESCRIPTION OF THE PREFERRED EMBODIMENTS

The present invention as defined in claim 1 is related to a mechanical kinetic energy coupler provided with an input side and an output side, wherein, it is provided with a special function that converts the rotary kinetic energy from the input side into and flexible acceleration with revolution difference and transmit the acceleration to the output side so to execute the non rigid transmission with revolution difference that varies with the load; on the contrary, rigid transmission without revolution difference of rotary kinetic energy is transmitted back from the output side to the input side.

Referring to Fig. 1 for a schematic view showing that a structural principle of a flexible and rigid bi-status coupler and its application device is essentially comprised of:
- an input side 101: containing an axial, wheel, disk, or any other rotary kinetic energy transmission structure to be coupled to one side of a one-way transmission 104 and also coupled to the active rotary part of a flexible transmission 103;
- an output side 102: containing an axial, wheel, disk, or any other rotary kinetic energy transmission structure to be coupled to the passive rotary part of a flexible transmission 103, and then couple to the other side of the one-way transmission 104;
- the flexible transmission 103: comprised of an electric vortex coupler, a fluid coupler, or a generation effect coupler, provided with a active rotary part and a passive rotary part to engage in non-rigid rotation kinetic transmission with revolution difference and the transmission varies depending on a load; or any other coupler providing the similar function, having its active rotary part coupled to the input side 101, and its passive rotary part coupled to the output side 102 and to one end of the one-way transmission 104; and
- the one-way transmission 104: comprised of a conventional one-way clutch, or a transmission that engages in one-way rotary transmission and idling in the other way, having its one end coupled to the input side 101 and the other end coupled to the passive rotary part of the flexible transmission 103;

By means of the structure as described above, the rotary kinetic energy is transmitted from the input side 101 to the output side 102 through flexible transmission of non-rigid transmission; on the contrary, the rotary kinetic energy transmitted back from the output side 102 through the one-way transmission 104 to the input side 101 relates to a rigid transmission without revolution difference.

Fig. 2 shows a preferred embodiment of a bi-status coupler according to the invention that is comprised of an electric vortex coupler incorporated with a one-way transmission including:
- an input side 201: containing an axial, wheel, disk, or any other rotary kinetic energy transmission structure to be coupled to one side of a one-way transmission 204 and also coupled to the active rotary part 2031 of an electric vortex coupler;
- an output side 202: containing an axial, wheel, disk, or any other rotary kinetic energy transmission structure to be coupled to the passive rotary part 2032 of the electric vortex coupler, and then couple to the other side of the one-way transmission 204;
- the electric vortex coupler 203: including a magnetic field structure comprised of a permanent magnet or a winding excited by current to serve as the active rotary part 2031 of the electric vortex coupler; and an electric vortex conductor serves as the passive rotary part 2032 of the electric vortex coupler; consequently, when the active rotary part 2031 of the electric vortex coupler is rotating as driven by the input side 201, a relative revolution difference is created by electric vortex effect that varies depending on the changed load between the active rotary part 2031 of the electric vortex coupler and the input side 201, further to engage in flexible transmission to draw the passive rotary part 2032 of the electric vortex coupler and then to drive the output side 202; and
- the one-way transmission 204: comprised of a conventional one-way clutch, or a transmission that engages in one-way rotary transmission and idling in the other way, having its one end coupled to the input side 201 and the other side, to the passive rotary party 2032 of the electric vortex coupler.

Fig. 3 shows a bi-status coupler in the structure illustrated in Fig. 1 that is comprised of a fluid coupler incorporated with a one-way transmission including:
- an input side 301: containing an axial, wheel, disk, or any other rotary kinetic energy transmission structure to be coupled to one side of a one-way transmission 304 and also coupled to the active rotary part 3031 of a fluid coupler;
- an output side 302: containing an axial, wheel, disk, or any other rotary kinetic energy transmission structure to be coupled to the passive rotary part 3032 of the fluid coupler, and then couple to the other side of the one-way transmission 304;
- the fluid coupler 303: comprised of an active rotary part 3031 of a fluid coupler, coupled to the input side 301, of the fluid coupler provided with multiple fins that produce actuated flow force, a passive rotary part 3032 of the fluid coupler that is driven by the flow force, and a casing, so that when the active rotary part 3031 of the fluid coupler is rotating as driven by the input side 301, a relative revolution difference that varies depending on the changed load is produced in the course of the transmission of kinetic energy via gas or liquid as the medium, thus to further engage in flexible transmission to drive the passive rotary part 3032 of the fluid coupler and the output side 302; the coupling relation respectively between the active rotary part 3031 of the fluid coupler and the input side 301 as well as between the passive rotary part 3032 of the fluid coupler and the output side 302 can be exchanged to such that the active rotary part 3031 of the fluid coupler is coupled to the output side 302, and the passive rotary part 3032 of the fluid coupler is coupled to the input side 301; and
- the one-way transmission 304: comprised of a conventional one-way clutch, or a transmission that engages in one-way rotary transmission and idling in the other way, having its one end coupled to the input side 301 and the other side, to the passive rotary party 3032 of the fluid coupler.

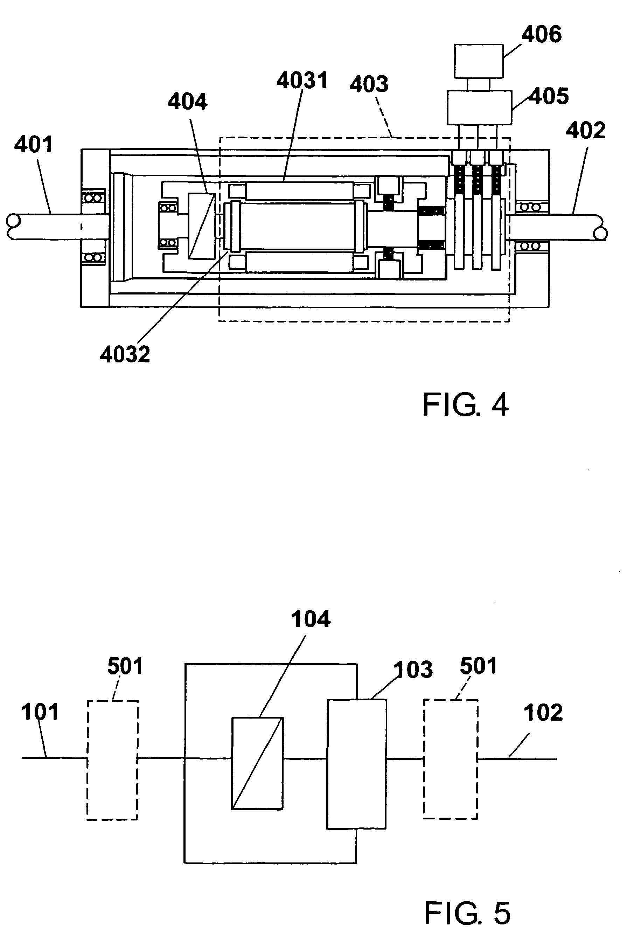

Fig. 4 shows a bi-status coupler in the structure illustrated in Fig. 1 that is comprised of a generation effect coupler incorporated with a one-way transmission including:
- an input side 401: containing an axial, wheel, disk, or any other rotary kinetic energy transmission structure to be coupled to one side of a one-way transmission 404 and also coupled to the active rotary part 4031 of a generation effect coupler;
- an output side 402: containing an axial, wheel, disk, or any other rotary kinetic energy transmission structure to be coupled to the passive rotary part 4032 of the generation effect coupler, and then couple to the other side of the one-way transmission 404;
- the generation effect coupler 403: comprised of the active rotary part 4031 of the generation effect coupler related to a magnetic field comprised of a permanent magnet or a winding excited by current; and an armature engaging in relative rotation serves as the passive rotary part 4032 of the generation effect coupler; the active rotary party 4031 of the generation effect coupler is coupled to the input side 401 and the passive rotary part 4032 of the generation effect coupler is coupled to the output side 402, both control the generation power of the generation effect coupler 403 transmitted to a load 406 by means of a generation load controller 405; consequently, when the active rotary part 4031 of the generation effect coupler is rotating as driven by the input side 401, a relative revolution difference is created that varies depending on the changed load to execute flexible transmission of non-rigid transmission to drive the passive rotary part 4032 of the generation effect coupler and the to drive the output side 402; the coupling relation respectively between the active rotary part 4031 of the generation effect coupler and the input side 401 as well as between the passive rotary part 4032 of the generation effect coupler and the output side 402 can be exchanged to such that the active rotary part 4031 of the generation effect coupler is coupled to the output side 402, and the passive rotary part 4032 of the generation effect coupler is coupled to the input side 401;
- the one-way transmission 404: comprised of a conventional one-way clutch, or a transmission that engages in one-way rotary transmission and idling in the other way, having its one end coupled to the input side 401 and the other side, to the passive rotary party 4032 of the generation effect coupler; and
- a generation load controller 405: comprised of a dynamo-electric or solid-state electronic circuit to control the generation power of the generation effect coupler 403;
- a load 406: related to a resistance or other electricity-actuated load to serve as the generation load for the generation effect coupler 403.

The flexible and rigid bi-status coupler and its application device is further adapted on its output side in series a controllable clutch for the flexible and rigid bi-status coupler and its application device to engage in mixed control. Fig. 5 showing a schematic view of a controllable clutch adapted to the input side or the output side of the example illustrated in Fig. 1 is essentially comprised of:
- an input side 101: containing an axial, wheel, disk, or any other rotary kinetic energy transmission structure to be coupled to one side of a one-way transmission 104 and also coupled to the active rotary part of a flexible transmission 103;
- an output side 102: containing an axial, wheel, disk, or any other rotary kinetic energy transmission structure to be coupled to the passive rotary part of a flexible transmission 103, and then couple to the other side of the one-way transmission 104;
- the flexible transmission 103: comprised of an electric vortex coupler, a fluid coupler, or a generation effect coupler, provided with a active rotary part and a passive rotary part to engage in non-rigid rotation kinetic transmission with revolution difference and the transmission varies depending on a load; or any other coupler providing the similar function, having its active rotary part coupled to the input side 101, and its passive rotary part coupled to the output side 102 and to one end of the one-way transmission 104;
- the one-way transmission 104: comprised of a conventional one-way clutch, or a transmission that engages in one-way rotary transmission and idling in the other way, having its one end coupled to the input side 101 and the other end, to the passive rotary part of the flexible transmission 103; and
- a controllable clutch 501: controllable by manual, mechanical force, electromagnetic force or fluid force to engaged the closed transmission and disengagement to cut off, thus to control the external transmission of the input side 101, or to control the external transmission of the output side 102; and the controllable clutch 501 may be provided on the input side 101 or on the output side 102 as applicable.

The flexible and rigid bi-status coupler and its application device of the present invention by respectively giving flexible and rigid transmission bi-status coupling functions in both of the input and the output directions to be applied in energy storage impact type of load, such as a press or a punch lathe, or an instable fluid force drive device, such as a fluid force generator or fluid force actuated extractor hood, or a flywheel energy storage device, or other loads, is innovative with specific functions.

## Claims

1. The flexible and rigid bi-status coupler that transmits, the rotary kinetic energy with flexible acceleration with revolution difference from an input side to an output side for the output side to execute non-rigid transmission with revolution difference that varies with the load; on the contrary, rigid transmission without revolution difference of rotary kinetic energy is transmitted back from the output side to the input side, the coupler comprising:
- an input side (201);
- an output side (202);
- a flexible transmission (203);
- a one-way transmission (204) wherein the rotary kinetic energy is transmitted back from the output side (202) through the one-way transmission (204) to the input side (201) without revolution difference;
**characterised in that** the flexible transmission is an electric vortex coupler, wherein:
- the input side (201) contains a rotary kinetic energy transmission structure which is coupled to one side of the one-way transmission (204) and which is also coupled to the active rotary part (2031) of the electric vortex coupler;
- the output side (202) contains a rotary kinetic energy transmission structure which is coupled to the passive rotary part (2032) of the electric vortex coupler, and which then couples to the other side of the one-way transmission (204);
- the electric vortex coupler (203) includes a magnetic field structure comprised of a permanent magnet or a winding excited by current to serve as the active rotary part (2031) of the electric vortex coupler; and an electric vortex conductor serves as the passive rotary part (2032) of the electric vortex coupler; such that when the active rotary part (2031) of the electric vortex coupler is rotating as driven by the input side (201), a relative revolution difference is created by electric vortex effect that varies depending on the changed load between the active rotary part (2031) of the electric vortex coupler and the input side (201), further to engage in flexible transmission to draw the passive rotary part (2032) of the electric vortex coupler and then to drive the output side (202); and
- the one-way transmission (204) comprises a conventional one-way clutch, or a transmission that engages in one-way rotary transmission and idling in the other way, having its one end coupled to the input side (201) and the other side to the passive rotary part (2032) of the electric vortex coupler.

## Patentansprüche

1. Flexible und starre Zweizustandskupplung, die die kinetische Rotationsenergie mit flexibler Beschleunigung mit Umlaufunterschied von einer Eingangsseite zu einer Ausgangsseite für die Ausgangsseite überträgt, um eine nichtstarre Übertragung mit sich mit der Belastung änderndem Umlaufunterschied auszuführen; wobei im Gegensatz dazu eine starre Transmission ohne Umlaufunterschied kinetische Rotationsenergie von der Ausgangsseite zurück zur Eingangsseite überträgt, wobei die Kupplung enthält:
- eine Eingangsseite (201),
- eine Ausgangsseite (202),
- eine flexible Transmission (203),
- eine Einwegtransmission (204), wobei die kinetische Rotationsenergie von der Ausgangsseite (202) über die Einwegtransmission (204) zurück zur Eingangsseite (201) ohne Umlaufunterschied übertragen wird,
**dadurch gekennzeichnet, dass** die flexible Transmission eine Wirbelstromkupplung ist, wobei:
- die Eingangsseite (201) eine Struktur zur Übertragung kinetischer Rotationsenergie enthält, die mit einer Seite der Einwegtransmission (204) verbunden ist und die ferner mit dem aktiven Rotationsteil (2031) der Wirbelstromkupplung verbunden ist,
- die Ausgangsseite (202) eine Struktur zur Übertragung kinetischer Rotationsenergie enthält, die mit einem passiven Rotationsteil (2032) der Wirbelstromkupplung verbunden ist und die dann mit der anderen Seite der Einwegtransmission (204) verbunden ist,
- die Wirbelstromkupplung (203), die eine aus einem Permanentmagneten oder aus einer durch Strom erregten Wicklung bestehenden Magnetfeldstruktur enthält, um als der aktive Rotationsteil (2031) der Wirbelstromkupplung zu dienen, und wobei ein Wirbelstromleiter als passiver Rotationsteil (2032) der Wirbelstromkupplung dient, derart, dass wenn sich der aktive Rotationsteil (2031) der Wirbelstromkupplung bei Antrieb durch die Eingangsseite (201) durch Wirbelstromwirkung, die sich in Abhängigkeit von der veränderten Belastung zwischen dem aktiven Rotationsteil (2031) der Wirbelstromkupplung und der Eingangsseite (201) ändert, ein relativer Umlaufunterschied erzeugt wird, weiter um in flexible Transmission überzugehen, um den passiven Rotationsteil (2032) der Wirbelstromkupplung zu ziehen und dann die Ausgangsseite (202) anzutreiben, und
- die Einwegtransmission (204) eine herkömmliche Einwegkupplung oder eine Transmission enthält, die in eine Einwegrotationstransmission und andersherum in Leerlauf übergeht, wobei ein Ende davon mit der Eingangsseite (201) und die andere Seite mit dem passiven Rotationsteil (2032) der Wirbelstromkupplung verbunden ist.

## Revendications

1. Embrayage à deux états, l'un progressif et l'autre rigide qui transmet l'énergie cinétique rotative selon une accélération progressive et selon une différence de rotation entre un côté d'entrée et un côté de sortie afin que se produise du côté de la sortie une transmission progressive avec une différence de rotation se modifiant avec la charge ; ou au contraire une transmission rigide sans différence de rotation de l'énergie cinétique rotative qui est rétro-transmise de la sortie vers l'entrée, l'embrayage comprenant :
- un côté d'entrée (201) ;
- un côté de sortie (202) ;
- une transmission progressive (203) ;
- une transmission unidirectionnelle (204) dans laquelle l'énergie cinétique rotative est rétro-transmise de la sortie (202) par la transmission unidirectionnelle (204) vers l'entrée (201) sans différence de rotation ;
**caractérisé en ce que** la transmission progressive est un embrayage électrique à vortex, dans lequel :
- le côté d'entrée (201) comprend une structure de transmission d'énergie cinétique rotative qui est couplée d'un côté à la transmission unidirectionnelle (204) et qui est également couplée à la pièce rotative active (2031) de l'embrayage électrique à vortex ;
- le côté de sortie (202) comprend une structure de transmission d'énergie cinétique rotative qui est couplée à la pièce rotative passive (2032) de l'embrayage électrique à vortex, et qui couple alors l'autre côté de la transmission unidirectionnelle (204) ;
- l'embrayage électrique à vortex (203) comprend une structure de champ magnétique comportant un aimant permanent ou une bobine excitée par courant pour servir de pièce rotative active (2031) pour l'embrayage électrique à vortex ; et un conducteur électrique à vortex servant de pièce rotative passive (2032) pour l'embrayage électrique à vortex; pour que lorsque la pièce rotative active (2031) de l'embrayage électrique à vortex est en rotation et entraînée par le côté d'entrée (201), une différence de rotation relative est produite par l'effet de vortex électrique qui change en fonction de la modification de charge entre la pièce rotative active (2031) de l'embrayage électrique à vortex et le côté d'entrée (201), pour s'engager en outre selon une transmission progressive d'entraînement de la pièce rotative passive (2032) de l'embrayage électrique à vortex et alors entraîner le côté de sortie (202) ; et
- la transmission unidirectionnelle (204) comprend un embrayage unidirectionnel conventionnel, ou une transmission qui s'engage selon une transmission rotative unidirectionnelle et au ralenti dans l'autre sens, présentant une extrémité accouplée au côté d'entrée (201) et accouplée de l'autre côté à la pièce rotative passive (2032) de l'embrayage électrique à vortex.
